# EUROPÄISCHE PATENTANMELDUNG

(11) **EP 0 566 770 A1**
(43) Veröffentlichungstag der Anmeldung: **27.10.1993**
(21) Anmeldenummer: 92107053.8
(22) Anmeldetag: 24.04.1992
(51) Int. Cl.: B23Q 1/02, B25B 11/00

(54) **Verfahren und Vorrichtung zum Aufteilen von Platten und Bearbeiten der durch das Aufteilen erzeugten Werkstücke**

(71) Anmelder: HOMAG MASCHINENBAU AG, D-72296 Schopfloch (DE)
(72) Erfinder: Kalmbach, Kurt Dipl.Ing. (FH), W-7291 Glatten (DE); Rathgeber, Peter Dipl. Ing (FH), W-7295 Dornstetten (DE); Gauss, Achim Dipl.Ing (FH), W-7290 Freudenstadt-Dietersweiler (DE)
(74) Vertreter: Kohlmann, Karl Friedrich, Dipl.-Ing.

(57) **Zusammenfassung**

Die Erfindung betrifft ein Verfahren und eine Vorrichtung zum Aufteilen von Platten, insbesondere von großformatigen Platten aus Holz, Holzwerkstoffen, Kunststoff oder dergleichen, und Bearbeiten der durch das Aufteilen erzeugter Werkstücke, bei dem die Platten bzw. die Werkstücke über eine Saugeinrichtung stationär gehalten und in diesem Zustand rand-, ober- und/oder unterseitig über in X-, Y- und/oder in Z-Richtung verfahrbare und gegebenenfalls in weiteren Richtungen dreh-, schwenk- oder kippbare, vorzugsweise CNC-gesteuerte Werkzeuge bearbeitet werden. Um eine universellere Bearbeitung zu ermöglichen, werden die Platten bzw. die Werkstücke durch eine variierbar an der Unterseite der Werkstücke angreifende Saugeinrichtung gehalten, über die sie in mindestens eine weitere Bearbeitungsebene anhebbar sind.

## Beschreibung

Die vorliegende Erfindung betrifft ein Verfahren und eine Vorrichtung zum Aufteilen von Platten, insbesondere von großformatigen Platten aus Holz, Holzwerkstoffen, Kunststoff oder dergleichen, und Bearbeiten der durch das Aufteilen erzeugter Werkstücke, bei dem die Platten bzw. die Werkstücke über eine Saugeinrichtung stationär gehalten und in diesem Zustand rand-, ober- und/oder unterseitig über in X-, Y- und/oder in Z-Richtung verfahrbare und gegebenenfalls in weiteren Richtungen dreh-, schwenk- oder kippbare, vorzugsweise CNC-gesteuerte Werkzeuge bearbeitet werden.

Bei Vorrichtungen dieser Art, welche in der Fachwelt kurz als sogenannte Bearbeitungszentren bezeichnet werden, besteht die Saugeinrichtung zum stationären Halten der Platten bzw. Werkstücke meist aus einer Anzahl von in einem ebenen Bearbeitungstisch angeordneten Bohrungen oder aus einer Anzahl von in einem bestimmten Raster angeordneten Einzelsaugern. Zum Halten der Platten bzw. der Werkstücke werden die Bohrungen oder die Einzelsauger mit einer Saugluftquelle verbunden.

Um randseitige Bearbeitungsvorgänge an den Werkstücken durchführen zu können, sind auch Saugeinrichtungen bekannt, die aus einer Anzahl von auf einer Tischplatte aufgesetzten Saugköpfen bestimmter Höhe bestehen, so daß die Werkstücke in einem Abstand über der Tischplatte gehalten werden können.

Allen bekannten Konstruktionen ist gemeinsam, daß die Saugeinrichtungen in einem vorgegebenen, allenfalls durch Montageaufwand veränderbaren Raster auf dem Arbeitstisch angeordnet und hinsichtlich der Bearbeitung der Werkstücke nach dem Aufteilen der Platten nur wenige einfache Bearbeitungsvorgänge durchführbar sind.

Aufgabe der vorliegenden Erfindung ist es, eine neuartige Verfahrensweise und Vorrichtung der eingangs genannten Gattung zu schaffen, mit der eine universellere Bearbeitung der durch das Aufteilen der Platten hergestellten Werkstücke möglich ist.

Diese Aufgabe wird erfindungsgemäß durch eine Verfahrensweise gelöst, bei der die Platten bzw. die Werkstücke durch eine variierbar an der Unterseite der Werkstücke angreifende Saugeinrichtung gehalten und über diese in mindestens eine weitere Bearbeitungsebene anhebbar sind.

Durch die variierbare Gestaltung der Saugeinrichtung kann diese der jeweils gewünschten Aufteilung der Platten und der jeweiligen Form der durch die Aufteilung erzeugten Werkstücke optimal angepaßt werden. Durch die Möglichkeit der Anhebung der in dieser Weise optimal gehaltenen Werkstücke in eine weitere Bearbeitungsebene sind erstmalig auch kompliziertere und aufwendigere zusätzliche Bearbeitungsvorgänge, insbesondere im Randbereich oder auf der Unterseite der Werkstücke möglich. Von wesentlicher Bedeutung ist dabei, daß die zusätzlichen Bearbeitungsvorgänge ohne jeglichen Umspannvorgang oder erneutes Einspannen durchgeführt werden können. Umspann- und Einspannvorgänge erfordern bekanntlich jeweils vorgeschaltete Justiervorgänge, wodurch der Bearbeitungsablauf zwangsläufig komplizierter und aufwendiger wird.

Gemäß einer vorteilhaften Weiterbildung des erfindungsgemäßen Verfahrens können die Platten über eine Transporteinrichtung in den Bereich der Saugeinrichtung eingefördert und nach erfolgter Aufteilung und Bearbeitung die Werkstücke über die Transporteinrichtung wieder ausgefördert werden.

Zur weiteren Automatisierung der erfindungsgemäßen Verfahrensweise ist es vorteilhaft, die Lage der Platten über der Saugeinrichtung über eine automatisch arbeitende Ausrichteinrichtung festzulegen.

Eine bevorzugte Arbeitsweise des erfindungsgemäßen Verfahrens ist durch folgende Schritte gekennzeichnet:
- Einstellen der Saugeinrichtung entsprechend der Aufteilung der Werkstücke,
- Einfördern der Platte über die Transporteinrichtung in einer Beschickungsebene
- Ausrichten der Platte in der X- und Y-Richtung über der Saugeinrichtung durch die Ausrichteinrichtung,
- In-Anlage-Bringen der Saugeinrichtung an der Unterseite der Platte durch Anheben oder Absenken der Platte in eine erste Bearbeitungsebene
- Spannen der Platte durch Anschließen der Saugeinrichtung an eine Saugluftquelle,
- Aufteilen der Platte in Werkstücke durch ein Werkzeug und gegebenenfalls Zerspanen von Reststücken,
- Anheben ausgewählter Werkstücke in eine oder mehrere weitere Bearbeitungsebenen und rand-, ober- und/oder unterseitige Bearbeitung durch ein oder mehrere weitere Werkzeuge,
- Absenken der bearbeiteten Werkstücke in die erste Bearbeitungsebene,
- nach Abarbeitung aller Werkstücke Absperren der Saugeinrichtung gegenüber der Saugluftquelle sowie Verbringen der Werkstücke in die Beschickungsebene,
- Ausfördern der Werkstücke durch die Transporteinrichtung sowie Abtransportieren etwaiger Restteile in der Beschickungsebene.

Aufgrund der erfindungsgemäßen Verfahrensweise kann in einem Aufspannvorgang sowohl ein optimiertes Aufteilen der Platten in Werkstücke unterschiedlichster Form als auch eine vollständige oder zumindest teilweise Fertigbearbeitung der Werkstücke in bisher noch nicht bekanntem Umfang erfolgen. Die für die Gesamtbearbeitung erforderlichen Rüstzeiten sind dabei im Vergleich mit bekannten Verfahrensweisen erheblich reduziert.

Eine vorteilhafte Vorrichtung der eingangs beschriebenen Gattung zur Lösung der gestellten Aufgabe ist erfindungsgemäß dadurch gekennzeichnet, daß die Saugeinrichtung aus einer Anzahl von Einzelsaugern oder Saugergruppen besteht, die in Grenzen einzeln oder in Gruppen in X- und Y-Richtung verfahrbar und in Z-Richtung heb- und senkbar sind.

Eine derartige Vorrichtung ist einfach aufgebaut, daher kostengünstig herzustellen und in relativ geringem Umfang störanfällig.

Bei einer bevorzugten Ausführungsform einer derartigen Vorrichtung sind die Einzelsauger einer Saugergruppe auf einer Saugerleiste angeordnet, die sich in X-Richtung erstreckt und in Y-Richtung in Grenzen parallelverfahrbar ist. Eine derartige Anordnung eignet sich insbesondere für solche Vorrichtungen, bei denen die Werkstücke in X-Richtung über die Saugeinrichtung eingefördert werden.

Um die Variabilität und die Einsatzmöglichkeiten zu erhöhen, ist es bei einer derartigen Anordnung vorteilhaft, daß einzelne Sauger der Saugergruppe auf der Saugerleiste in X-Richtung verschiebbar zueinander angeordnet sind.

Bei der Verarbeitung von Platten genormter Abmessungen ist es zur Reduzierung des Aufwandes vorteilhaft, die Einzelsauger auf der jeweiligen Saugerleiste in unterschiedlichen Abständen voneinander anzuordnen. In derartigen Fällen ist es zweckmäßig, wenn, in X-Richtung betrachtet, die einlaufseitig angeordneten Einzelsauger einen kleineren Abstand zueinander aufweisen als die übrigen Einzelsauger.

Für die Bearbeitung von Platten üblicher Abmessung wird ohne Variabilitätseinbuße ein optimaler maschineller Aufwand dann erreicht, wenn die Saugeinrichtung insgesamt drei sich in X-Richtung erstreckende und parallel zueinander verlaufende Saugerleisten aufweist. Mit einer derartigen Ausgestaltung sind die im Möbelbau häufigsten Bearbeitungsvorgänge ohne weiteres durchführbar.

Um automatische Beschickungsvorgänge realisieren zu können, ist es vorteilhaft, eine Vorrichtung der erfindungsgemäßen Art mit einer Transporteinrichtung auszustatten. Gemäß einem bevorzugten Ausführungsbeispiel kann die Transporteinrichtung von einem absenkbaren Bandförderer gebildet sein. Der Bandförderer kann dabei aus mindestens zwei Förderbändern bestehen, die parallel zueinander und parallel zu den Saugerleisten verlaufen.

Eine besonders zweckmäßige Anordnung ergibt sich, wenn dicht neben jeder Saugerleiste jeweils ein Förderband des Bandförderers angeordnet ist, das zusammen mit der Saugerleiste in Y-Richtung verfahrbar ist.

Im Falle der Anordnung einer automatischen Transporteinrichtung für die Platten ist es vorteilhaft, auch die Ausrichtung der Platten über der Saugeinrichtung automatisch durchzuführen.

Gemäß einer vorteilhaften Weiterbildung der Erfindung ist eine derartige automatisch arbeitende Ausrichteinrichtung zweckmäßigerweise zur Lagefixierung der Platten in X-Richtung mit in den Bereich der ersten Bearbeitungsebene ausfahrbaren Anschlageinrichtungen ausgestattet. Diese Anschlageinrichtungen können in verschiedenster Weise ausgebildet sein. Vorteilhaft sind Anschlagbolzen, Anschlaglineale oder dergleichen. Die Anschlageinrichtungen sind zweckmäßigerweise derart angeordnet, daß die Platten beim Antransport durch die Transporteinrichtung mit ihrer in Transportrichtung vorderen Seitenkante an den Anschlageinrichtungen anschlagen. Damit ist die Lage der Platten in X-Richtung über der Saugeinrichtung präzise festgelegt.

Zur Lagefixierung der Platten in Y-Richtung wiederum ist es vorteilhaft, daß zum einen in den Bereich der ersten Bearbeitungsebene ausfahrbare Anschlageinrichtungen, und zum anderen eine in der ersten Bearbeitungsebene wirksame Schieberanordnung vorgesehen ist, über die die Platten gegen die Anschlageinrichtungen schiebbar sind. Auch hier können die Anschlageinrichtungen als Anschlagbolzen, Anschlagklötze oder Anschlagleisten ausgebildet sein. Die Anordnung ist lediglich derart zu treffen, daß die Platten beim Einfördern durch die Transporteinrichtung nach dem im vorangegangenen beschriebenen Ausrichten in der X-Richtung zwischen den Anschlageinrichtungen und der Schieberanordnung zu liegen kommen. Über die Schieberanordnung werden die Platten dann in Y-Richtung soweit verschoben, bis sie an den der Schieberanordnung gegenüberliegenden Anschlageinrichtungen anliegen. Damit ist die Lagefixierung in Y-Richtung abgeschlossen.

Mit einer erfindungsgemäßen Anordnung dieser Art läßt sich somit nicht nur das Aufteilen von Platten in Werkstücke bestimmter Größe und deren daran anschließende Bearbeitung, sondern auch der Vorgang des Zuführens der Platten einschließlich des hierfür erforderlichen Justiervorganges in X- und Y-Richtung vollautomatisch durchführen.

Im folgenden ist zur weiteren Erläuterung zum besseren Verständnis der Erfindung ein Ausführungsbeispiel einer nach dem erfindungsgemäßen Verfahren arbeitenden Vorrichtung unter Bezugnahme auf die beigefügten Zeichnungen näher beschrieben und erläutert.
- Figur 1: zeigt schematisch ein Ausführungsbeispiel einer nach dem erfindungsgemäßen Verfahren arbeitenden Vorrichtung in Form eines Bearbeitungszentrums, und
- Figuren 2 bis 5: zeigen schematisch verschiedene Stadien des Verfahrensablaufes.

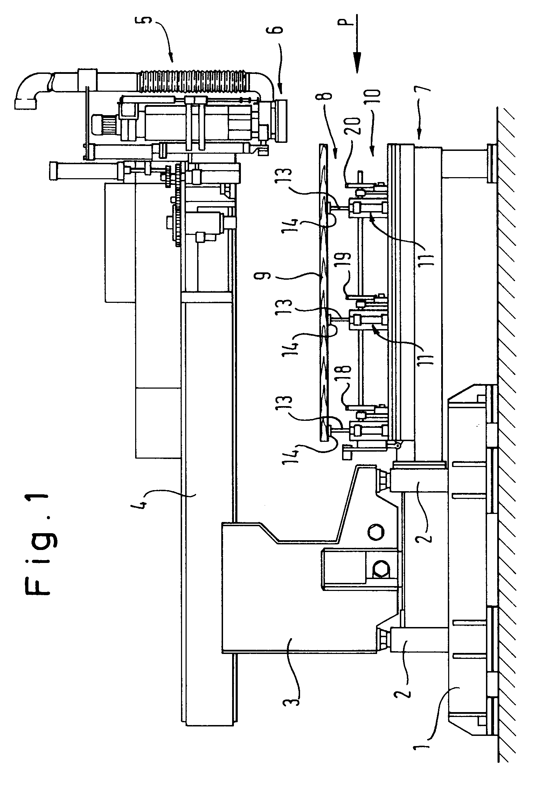

Das in Figur 1 dargestellte Bearbeitungszentrum besteht in bekannter Weise aus einem Maschinenbett 1, auf dem in X-Richtung verlaufende Längsführungen 2 angeordnet sind. Auf den Längsführungen 2 ist ein Ständer 3 gelagert, der über bekannte Mittel entlang der Längsführungen in X-Richtung verschiebbar ist.

Der Ständer 3 trägt einen Ausleger 4, der in Y-Richtung am Ständer 3 verschiebbar gelagert ist und an seinem vorderen Ende eine Einheit 5 trägt, die im Bereich 6 die für das Aufteilen der Platten 9 und das Bearbeiten der durch das Aufteilen erzeugten Werkstücke benötigten Werkzeuge trägt.

Mit den Längsführungen 2 und dem Maschinenbett 1 ist ein Bearbeitungstisch 7 verbunden, der auf seiner Oberseite eine Saugeinrichtung 8 trägt, die an der Unterseite der Platten 9 angreifen.

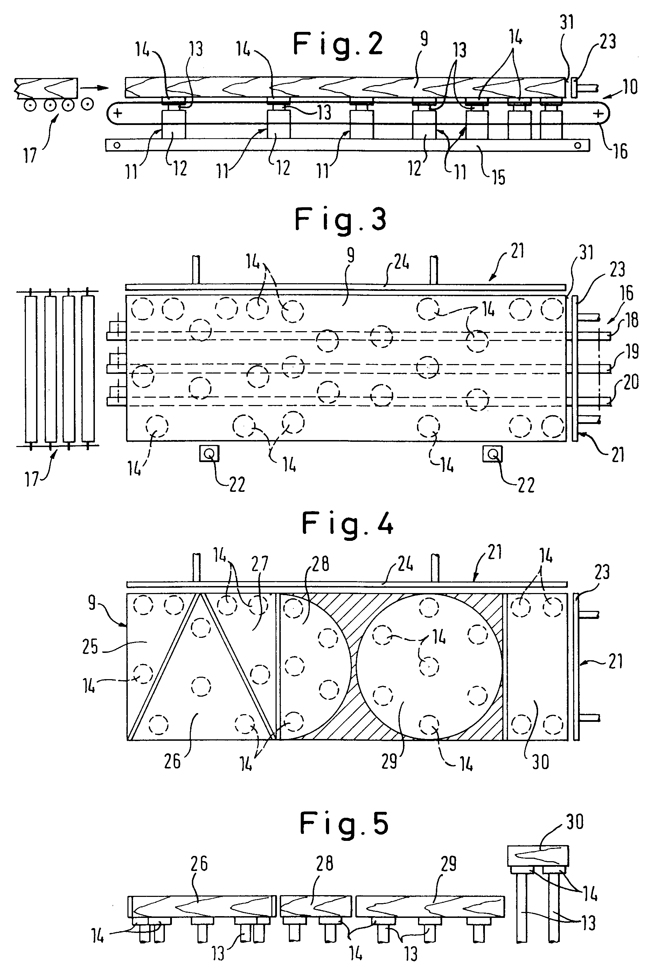

Auf der Oberseite des Bearbeitungstisches 7 ist ferner eine Transporteinrichtung 10 angeordnet, die zum Einfördern der Platten 9 über den Bearbeitungstisch 7 und zum Ausfördern der bearbeiteten Werkstücke dient, wie dies im folgenden im Zusammenhang mit den Figuren 2 bis 5 noch beschrieben werden wird.

Figur 2 zeigt stark vereinfacht die auf der Oberseite des Bearbeitungstisches 7 angeordnete Saugeinrichtung 8 einschließlich der Transporteinrichtung 10 aus der Richtung des Pfeiles P der Figur 1.

Die Saugeinrichtung 8 besteht aus einer Anzahl von Einzelsaugern 11, die jeweils aus einem stehend angeordneten, doppelt wirkenden Zylinder 12 bestehen, auf dessen nach oben aus dem Zylinder 12 herausragender Kolbenstange 13 ein Saugteller 14 angeordnet ist, der mit der Unterseite der Platten 9 bzw. den Unterseiten der durch die Aufteilung der Platten 9 gebildeten Werkstücke in Eingriff bringbar ist.

Die Einzelsauger 11 wiederum sind in Gruppen zusammengefaßt. Bei dem in Figur 2 dargestellten Ausführungsbeispiel ist eine Gruppe von Einzelsaugern auf einer Saugerleiste 15 befestigt.

Die Einzelsauger 11 sind derart konzipiert, daß die Saugteller 14 einzeln oder in Gruppen über die Kolbenstangen 13 jeweils in mindestens eine Bearbeitungsebene ausfahrbar sind, worauf später noch eingegangen werden wird.

Die Einzelsauger 11 sind darüber hinaus auf der Saugerleiste 15 in X-Richtung verschiebbar angeordnet.

Jede Saugerleiste 15 ist ferner zusammen mit den zugeordneten Einzelsaugern 11 auf dem Bearbeitungstisch in Y-Richtung parallelverschiebbar.

Wie aus den Figuren 1 bis 3 zu ersehen ist, wird die Transporteinrichtung 10 von einem Bandförderer 16 gebildet, der einlaufseitig durch einen Rollengang 17 ergänzt ist.

Der Bandförderer 16 besteht aus drei Förderbändern 18, 19 und 20, die sich in X-Richtung erstrecken und die in Y-Richtung auf dem Bearbeitungstisch parallelverschiebbar sind. Ferner sind die Förderbänder 18, 19 und 20 gemeinsam absenkbar und anhebbar ausgebildet.

Bei dem in Figur 1 dargestellten Ausführungsbeispiel ist jeweils ein Förderband des Bandförderers dicht neben einer Saugerleiste 15 angeordnet und zusammen mit dieser als Einheit in Y-Richtung auf dem Bearbeitungstisch 7 parallelverschiebbar.

Die erfindungsgemäße Vorrichtung ist ferner mit einer Ausrichteinrichtung 21 ausgestattet, die schematisch in den Figuren 2 bis 4 dargestellt ist. Diese Ausrichteinrichtung 21 umfaßt Anschlageinrichtungen, wie beispielsweise aus- und einfahrbare Anschlagbolzen 22 oder aus- und einfahrbare Anschlaglineale 23 und Schieber 24, auf deren Funktion später noch eingegangen werden wird.

Die erfindungsgemäße Vorrichtung arbeitet nun nach folgenden erfindungsgemäßen Verfahren:
In einem ersten Schritt wird die Saugeinrichtung 8 eingestellt. Dazu werden die Einzelsauger 11 einzeln oder in Gruppen in die für die jeweilige Aufteilung der Platten 9 erforderliche Position gebracht. Dies erfolgt vorzugsweise vollautomatisch über ein Optimierungsprogramm. In Figur 4 ist eine Möglichkeit einer derartigen Plattenaufteilung dargestellt. So sollen aus einer rechteckigen langgestreckten Platte 9 insgesamt drei dreieckige Werkstücke 25, 26 und 27, ein halbrundes Werkstück 28, ein kreisrundes Werkstück 29 und ein rechteckiges Werkstück 30 herausgearbeitet werden. Anhand des Optimierungsprogrammes wird die günstigste Aufteilung der Platte 9 festgelegt. Bei dem erwähnten Beispiel ergibt sich die in Figur 4 dargestellte optimale Aufteilung. Der gestrichelte Teil der Platte 9 bezeichnet Abfallteile.

Entsprechend der optimalen Aufteilung der Platte 9 werden die Einzelsauger 11 der Saugeinrichtung 8 positioniert. Die Position der Einzelsauger 11 für das vorliegende Beispiel ist in den Figuren 3 und 4 mit gestrichelten Kreisen angedeutet. Die gestrichelten Kreise symbolisieren die Lage der Saugteller 14 der Einzelsauger 11.

Während oder nach der Positionierung der Einzelsauger 11 wird die Platte 9 in einer Beschickungsebene über die Transporteinrichtung 10, d.h. über den Rollengang 17 und die Förderbänder 18, 19 und 20 des Bandförderers 16 über den Bearbeitungstisch 7 eingefördert. Bei diesem Fördervorgang schlägt die in Förderrichtung vordere Stirnkante 31 der Platte 9 an dem Anschlaglineal 23 an, wodurch die Lage der Platte 9 in X-Richtung festgelegt ist. Ist dies erfolgt, so tritt der Schieber 24 in Aktion und schiebt die Platte 9 gegen die Anschlagbolzen 22, so daß die Platte 9 nunmehr in ihrer endgültigen Lage in X- und Y-Richtung über dem Bearbeitungstisch ausgerichtet ist.

In einem zweiten Schritt werden dann die Einzelsauger 11 mit ihren Saugtellern 14 an der Unterseite der Platte 9 in Anlage gebracht. Dies erfolgt entweder durch Anheben der Einzelsauger, wodurch die Platte 9 von dem Bandförderer 16 abgehoben und in eine erste Bearbeitungsebene verbracht wird. Es kann jedoch auch der Bandörderer 16 abgesenkt und dadurch die Platte 9 auf die sich in der ersten Bearbeitungsebene befindlichen Saugteller 14 der Einzelsauger abgelegt werden. Durch Anschließen der Saugeinrichtung an eine Saugluftquelle wird dann die Platte 9 in ihrer ausgerichteten Lage über dem Bearbeitungstisch 7 festgespannt. In dieser Spannphase können die Mittel der Ausrichteinrichtung 21 in ihre Ruhestellung verbracht, d.h. die Anschlagbolzen 22 beispielsweise abgesenkt, das Anschlaglineal 23 abgesenkt oder weggeschwenkt und der Schieber 24 ebenfalls abgesenkt oder weggeschwenkt werden.

Nach diesen Arbeitsgängen erfolgt das Aufteilen der Platte 9 in Einzelwerkstücke in an sich bekannter Weise durch die im Bereich 6 der Einheit 5 des Bearbeitungszentrums eingespannten Werkzeuge. Dabei können im Bedarfsfalle kleine Restteile durch eine entsprechende Steuerung des Bearbeitungsvorganges vollständig zerspant werden, so daß keine Probleme für den Abtransport derartiger kleiner Restteile anfallen.

In einem weiteren Schritt werden dann ausgewählte Werkstücke durch bestimmte Einzelsauger in eine weitere Bearbeitungsebene angehoben, wie dies in Figur 5 am Beispiel des rechteckigen Werkstückes 30 schematisch dargestellt ist. Durch das Anheben ausgewählter Werkstücke in eine weitere Bearbeitungsebene ist eine rand-, ober- oder sogar unterseitige Bearbeitung durch ein oder mehrere Werkzeuge möglich, so daß die Werkstücke ohne Umspannvorgang fertigbearbeitet werden können.

Sobald alle Werkstücke abgearbeitet sind, werden die bearbeiteten Werkstücke wieder in die erste Bearbeitungsebene abgesenkt, die Saugeinrichtung 8 gegenüber der Saugluftquelle abgesperrt und die Werkstücke in die Beschickungsebene verbracht. Auf diese Weise wird die Verbindung zwischen den Saugtellern 14 der Einzelsauger 11 und den Werkstücken gelöst und damit die Einspannung aufgehoben, so daß die Werkstücke in einem letzten Schritt durch die Transporteinrichtung 10 in der Beschickungsebene aus dem Bereich des Bearbeitungstisches 7 herausgefördert werden können. Sofern größere Restteile angefallen sind, werden auch diese über die Transporteinrichtung 10 ausgefördert. Kleinere, nicht zerspante Restteile, die im Verlaufe der Bearbeitung auf den Bearbeitungstisch 7 fallen, können durch zusätzliche, nicht dargestellte Mittel aus dem Bereich des Bearbeitungstisches 7 gefördert werden.

Nach Abschluß dieser Arbeiten wird die Saugeinrichtung entsprechend der Aufteilung der neuen Platte 9 eingestellt, und der beschriebene Arbeitszyklus beginnt von vorn.

## Patentansprüche

1. Verfahren zum Aufteilen von Platten, insbesondere von großformatigen Platten aus Holz, Holzwerkstoffen, Kunststoff oder dergleichen, und Bearbeiten der durch das Aufteilen erzeugter Werkstücke, bei dem die Platten bzw. die Werkstücke über eine Saugeinrichtung stationär gehalten und in diesem Zustand rand-, ober- und/oder unterseitig über in X-, Y- und/oder in Z-Richtung verfahrbare und gegebenenfalls in weiteren Richtungen dreh-, schwenk- oder kippbare, vorzugsweise CNC-gesteuerte Werkzeuge bearbeitet werden,
dadurch **gekennzeichnet,** daß
die Platten bzw. die Werkstücke durch eine variierbar an der Unterseite der Werkstücke angreifende Saugeinrichtung gehalten und über diese in mindestens eine weitere Bearbeitungsebene anhebbar sind.

2. Verfahren nach Anspruch 1,
dadurch **gekennzeichnet,** daß
die Platten über eine Transporteinrichtung in den Bereich der Saugeinrichtung eingefördert und nach erfolgter Aufteilung und Bearbeitung die Werkstücke über die Transporteinrichtung wieder ausgefördert werden.

3. Verfahren nach Anspruch 1 oder 2,
dadurch **gekennzeichnet,** daß
die Lage der Platten über der Saugeinrichtung über eine Ausrichteinrichtung festgelegt wird.

4. Verfahren nach Anspruch 1 bis 3, gekennzeichnet durch folgende Schritte:
- Einstellen der Saugeinrichtung entsprechend der Aufteilung der Werkstücke,
- Einfördern der Platte über die Transporteinrichtung in einer Beschickungsebene
- Ausrichten der Platte in der X- und Y-Richtung über der Saugeinrichtung durch die Ausrichteinrichtung,
- In-Anlage-Bringen der Saugeinrichtung an der Unterseite der Platte durch Anheben oder Absenken der Platte in eine erste Bearbeitungsebene
- Spannen der Platte durch Anschließen der Saugeinrichtung an eine Saugluftquelle,
- Aufteilen der Platte in Werkstücke durch ein Werkzeug und gegebenenfalls Zerspanen von Reststücken,
- Anheben ausgewählter Werkstücke in eine oder mehrere weitere Bearbeitungsebenen und rand-, ober- und/oder unterseitige Bearbeitung durch ein oder mehrere weitere Werkzeuge,
- Absenken der bearbeiteten Werkstücke in die erste Bearbeitungsebene,
- nach Abarbeitung aller Werkstücke Absperren der Saugeinrichtung gegenüber der Saugluftquelle sowie Verbringen der Werkstücke in die Beschickungsebene,
- Ausfördern der Werkstücke durch die Transporteinrichtung sowie Abtransportieren etwaiger Restteile in der Beschickungsebene.

5. Vorrichtung zur Durchführung des Verfahrens nach Anspruch 1 bis 4,
dadurch **gekennzeichnet,** daß
die Saugeinrichtung (8) aus einer Anzahl von Einzelsaugern (11) oder Saugergruppen besteht, die in Grenzen einzeln oder in Gruppen in X- und Y-Richtung verfahrbar und in Z-Richtung heb- und senkbar sind.

6. Vorrichtung nach Anspruch 5,
dadurch **gekennzeichnet,** daß
die Einzelsauger (11) einer Saugergruppe auf einer Saugerleiste (15) angeordnet sind, die sich in X-Richtung erstreckt und in Y-Richtung in Grenzen parallelverfahrbar ist.

7. Vorrichtung nach Anspruch 6,
dadurch **gekennzeichnet,** daß
Einzelsauger (11) der Saugergruppe auf der Saugerleiste (15) in X-Richtung verschiebbar angeordnet sind.

8. Vorrichtung nach Anspruch 6,
dadurch **gekennzeichnet,** daß
die Einzelsauger (11) auf der Saugerleiste (15) in unterschiedlichen Abständen voneinander angeordnet sind.

9. Vorrichtung nach Anspruch 6 bis 8,
dadurch **gekennzeichnet,** daß
die Saugeinrichtung (8) drei sich in X-Richtung erstreckende und parallel zueinander verlaufende Saugerleisten (15) aufweist.

10. Vorrichtung nach Anspruch 5 zur Durchführung des Verfahrens nach Anspruch 2,
dadurch **gekennzeichnet,** daß
die Transporteinrichtung (10) von einem absenkbaren Bandförderer (16) gebildet ist.

11. Vorrichtung nach Anspruch 10 sowie 6 bis 9,
dadurch **gekennzeichnet,** daß
der Bandförderer (16) aus mindestens zwei Förderbändern (18, 19, 20) besteht, die parallel zueinander und parallel zu den Saugerleisten (15) verlaufen.

12. Vorrichtung nach Anspruch 11,
dadurch **gekennzeichnet,** daß
dicht neben jeder Saugerleiste (15) ein Förderband des Bandförderers (16) angeordnet ist, das zusammen mit der Saugerleiste in Y-Richtung verfahrbar ist.

13. Vorrichtung nach Anspruch 5 zur Durchführung des Verfahrens nach Anspruch 3,
dadurch **gekennzeichnet,** daß
die Ausrichteinrichtung (21) zur Lagefixierung der Platten (9) in X-Richtung in den Bereich der ersten Bearbeitungsebene ausfahrbare Anschlageinrichtungen wie Anschlagbolzen oder ein Anschlaglineal (23) aufweist.

14. Vorrichtung nach Anspruch 13,
dadurch **gekennzeichnet,** daß
die Ausrichteinrichtung (21) zur Lagefixierung der Platten (9) in Y-Richtung zum einen in den Bereich der ersten Bearbeitungsebene ausfahrbare Anschlageinrichtungen und zum anderen eine in der ersten Bearbeitungsebene wirksame Schieberanordnung (24) aufweist, über die die Platten gegen die Anschlageinrichtungen schiebbar sind.
